# EUROPEAN PATENT APPLICATION

(11) **EP 1 777 953 A1**
(43) Date of publication of application: **25.04.2007**
(21) Application number: 05770326.6
(22) Date of filing: 09.08.2005
(51) Int. Cl.: H04N 5/64, G02B 27/02

(54) **IMAGE DISPLAY DEVICE**

(30) Priority: 10.08.2004 JP 2004233912
(71) Applicant: SCALAR CORP., Tokyo 173-0004 (JP)
(72) Inventor: YAMAMOTO, Masao, C/o Scalar Corporation, Tokyo 173-0004 (JP)
(74) Representative: Skone James, Robert Edmund
(86) International application number: PCT/JP2005/014880
(87) International publication number: WO 2006/016691

(57) **Abstract**

To improve a small image display device of the type to be attached to glasses for use, so that it can be attached to glassed of any structure.

An image display device 3 has a liquid crystal display and a magnifying lens 114 contained therein. A user gets an imaging light from that display through the magnifying lens 114 to see an image. The image display device 3 includes a suction cup 160 on the back surface thereof. The suction cup 160 serves to attach it onto a smooth front surface of the glass lens included in the glasses.

## Description

### TECHNICAL FIELD

The present invention relates to a small image display device that can be used while worn on a part of the body such as the head.

### BACKGROUND OF THE INVENTION

Head mounted displays (HMDs), which are used while worn on a part of the body such as the head to place a video screen in front of each eye of the user, find applications in various fields including the field of virtual reality. Typical HMDs are designed, usually in the shape of a frame of goggles or large glasses, that block out outside light and force the user to see only the HMD's pictures. With an HMD used, the user can view images irrespective of the direction he or she faces but then again it gives the user visual isolation from the surrounding environment.

In recent years, small image display devices have been proposed that allow users to view images as well as the surrounding environment by means of presenting the images in a certain part of the field of vision.

Such image display devices are disclosed in, for example, Japanese patent laid open (JP-A-7-209600). The image display device comprises a liquid crystal display (LCD), a reflecting mirror, an ocular lens and other components contained within a single housing, A clip is snapped on the housing with which the image display device is attached to a glasses or sunglasses frame. The housing is placed on top of the glasses frame over the outside surface of it. An image that is displayed on the LCD is directed to one eye of the user in a diagonal down direction through the reflecting mirror, the ocular lens, and a lens of glasses.

The image display device of the type described allows the user to select whether he or she views the surrounding environment or looks at an image by moving his or her line of sight. It is highly valuable because of its usability during the daily life and availability at any places both inside and outside a building.

Therefore, such an image display device may find applications like an audio-visual version of a portable headset stereo in which the sound is played, which brings about significant changes to the lifestyle of the young.

Image display devices of this type are designed as being attachable to existing glasses. However, it is not easy to attach an image display device to glasses. This is because glasses have large variations in such features as the presence or absence of a frame, the material and thickness of a frame, or the material or dimensions of a temple. Thus, it is unexpectedly hard to provide an image display device that is attachable to any glasses.

Such a nuisance can be abated when glasses are for exclusive use in combination with an image display device. However, this is substantially equal to forcing customers to use glasses, the choice of which depends largely on fashion tastes. This would be the cause of customers dislike of using an image display device.

The present invention is directed to overcome the aforementioned problems and an object thereof is to provide a technique with which an image display device can be attached easily to any glasses.

### SUMMARY OF THE INVENTION

In order to solve the aforementioned problems, the present inventor provides the following invention. In the present invention, an image display device can be attached to a smooth surface of a glass lens of glasses. This is based on the following findings that the present inventor obtained.

As described above, glasses have large variations. Thus, it is not easy to provide an image display device that is attachable to any glasses. However, the present inventor has found through a trial and error process that all types of glasses have a certain common component without exception: a smooth surface of a glass lens. To achieve fixation of an image display device on the surface makes the image display device of the present invention attachable to any glasses.

It should be noted that the term "glass lens" as used herein includes common prescription lenses as well as nonprescription pieces that do not function as a lens. The image display device of the present invention is attachable to fashion glasses with nonprescription lenses.

Details of the present invention are described below. The present invention can be classified into two particular forms.

The first form of the present invention is as follows.

The present invention is an image display device intended to be attached, in use, to a glass lens which is a lens of glasses that a user wears. This image display device comprises an intermediate member adapted to be fixed to a smooth surface of said glass lens; and an image display device main body having display means and fixing means, the image display device being expected to be positioned in front of one eye of the user when the image display device is in use, the display means being adapted to direct an imaging light to form a predetermined image onto said one eye, thereby to provide said image to said one eye with said image included in a display area which is a part of the field of vision of said one eye, the fixing means being able to be fixed to said intermediate member in a removable manner.

This image display device can be attached to a smooth surface of a glass lens through the intermediate member adapted to be fixed to the smooth surface of the glass lens.

The image display device may be attached to either side of the smooth surface of the glass lens. However, it is easier to attach it on the side of the glass lens opposite to the face, taking into consideration the fact that there is not much space between the glass lens and the face. The same applies to the second form of the present invention that is described later.

Details of how the intermediate member in the present invention is fixed to the glass lens are not specifically determined as long as the intermediate member can be fixed to the smooth surface of the glass lens.

The intermediate member in the present invention may be completely fixed to said glass lens, or alternatively, may be removably fixed thereto. An intermediate member that can be fixed to and removed from glasses allows the image display device to be removed from the glasses when not being used.

A removable intermediate member relative to the glasses makes it necessary to include two operations, i.e., an operation to attach the intermediate member to the glasses before using the image display device and another operation to attach the image display device main body to the intermediate member at whenever time it is used. The intermediate member completely fixed to the glass lens is unconnected with such troubles because the attachment of the image display device main body to the intermediate member automatically results in fixation of the image display device to the glasses.

The intermediate member in the present invention may have a rod-shaped member that is adapted to be passed through said glass lens and fixed to said glass lens. In this case, the intermediate member is being fixed to the glass lens with the rod-shaped member. The intermediate member of this type is not easy attached to and removed from the glass lens, but can be fixed securely to the glass lens. This configuration provides an example where the intermediate member is completely fixed to the glass lens.

The intermediate member in the present invention may include a suction cup or an adhesive layer that can be removably attached to said glass lens, and the intermediate member may be adapted to be removably attached to said glass lens with said suction cup or said adhesive layer. This configuration provides an example where the intermediate member is fixed to the glass lens in a removable manner.

Details of how the intermediate member is fixed to the image display device main body are not specifically determined as long as the intermediate member and the image display device main body can be fixed to each other in a removable manner.

For example, the intermediate member of the present invention may include a rod-shaped projection, the rod-shaped projection being extended ahead of said glass lens when the intermediate member is fixed to said glass lens, the rod-shaped projection having a spherical portion at the end thereof that is generally spherical in shape. Said fixing means may have a hollow space with an opening on one side, the hollow space being available for receiving said spherical portion through the opening, and said spherical portion may be adapted to be held within said hollow space when said spherical portion is received in said hollow space.

The term "ahead" or "forward" as used herein refers to the side far away from the face of a user when he or she wears the glasses.

Alternatively, said intermediate member may include a fixture member having a hollow space with an opening facing forward as determined when it is fixed to said glass lens, and said fixing means may include a projection having a spherical portion that is generally spherical in shape at the end of a rod-shaped piece, the spherical portion may be adapted to be inserted into said hollow space, and said spherical portion may be adapted to be held within said hollow space when said spherical portion is received in said hollow space.

Alternatively, said intermediate member may include a convex portion having a convex surface that forms a part of a predetermined spherical surface, the convex portion curving forward as determined when it is fixed to said glass lens, and said fixing means may include a concave portion having a concave surface that is a curved surface corresponding to the contour of said convex surface, said convex portion being adapted to attract said concave portion towards it or vise versa with magnetic force.

Alternatively, said intermediate member may include a concave portion having a concave surface with an opening facing forward as determined when it is fixed to said glass lens, and said fixing means may include a convex portion having a convex surface that forms a part of a predetermined spherical surface which is a curved surface corresponding to the contour of said concave surface, said convex portion being adapted to attract said concave portion towards it or vise versa with magnetic force.

In addition, said intermediate member may include at least three projection pieces, each projection piece being extended forward as determined when it is fixed to said glass lens, from said glass lens, the projection pieces being arranged so that they are away from each other at a predetermined distance, and said fixing means may include a convex portion having a convex surface that is to be in contact with said projection pieces, said convex portion being adapted to attract said projection pieces towards it or vise versa with magnetic force. In this case, the convex portion is held by the projection pieces with the convex portion being in contact with the inner side of each projection piece. The convex portion is arranged on the glass lens at a position that allows it.

The intermediate member is fixed to both the glass lens and the image display device main body. Thus, the intermediate member has a structure to hold the intermediate member and the glass lens together as well as a structure to hold the intermediate member and the image display device main body together. The aforementioned structure to hold the intermediate member and the glass lens together and the aforementioned structure to hold the intermediate member and the image display device main body together may be in any one of appropriate combinations on the single intermediate member.

Said fixing means in the image display device main body of the present invention may be adapted to allow movement of said image display device main body in at least one of the up-and-down direction and the right-and-left direction while being held by said intermediate member.

This allows a user to adjust the angle of the image display device main body for easier viewing of images produced on the display means of the image display device main body after the image display device main body is fixed to the glass lens.

The second form of the present invention is as follows.

The second form of the present invention is an image display device intended to be attached, in use, to a smooth surface of a glass lens which is a lens of glasses that a user wears. This image display device comprises display means and lens holding means, the image display device being expected to be positioned in front of one eye of the user when the image display device is in use, the display means being adapted to direct an imaging light to form a predetermined image onto said one eye, thereby to provide said image to said one eye with said image included in a display area which is a part of the field of vision of said one eye, the lens holding means being able to be fixed to said glass lens in a removable manner.

This image display device does not include the intermediate member unlike the first form of the present invention and is thus attached directly to the smooth surface of the glass lens.

The lens holding means in this case may have any one of suitable configurations as long as it can be fixed to the smooth surface of the glass lens. For example, the lens holding means may include a suction cup or an adhesive layer that can be removably attached to said glass lens, and may be adapted to be fixed to said glass lens in a removable manner with said suction cup or said adhesive layer.

The lens holding means may be adapted to allow swing movement of said image display device in at least one of the up-and-down and right-and-left directions while being fixed to said glass lens.

This allows a user to adjust the angle of the image display device for easier viewing of images produced on the display means of the image display device after the image display device is fixed to the glass lens.

The image display device according to the second form of the present invention may comprise a casing in which said display means is contained, and a lens barrel extended from said casing, the lens barrel containing a lens for use in directing an imaging light from said display means to an eye of a user. In this case, said lens holding means may be provided on or in said lens barrel. Alternatively, said lens holding means may be in the form of a suction cup having a bore formed therein, the bore being adapted to engage with the outer periphery of said lens barrel, the suction cup being attached to the outer peripheral surface of said lens barrel with said lens barrel being held within the bore. Alternatively, said lens holding means may be in the form of a suction cup having a transparent portion therein through which said imaging light is allowed to travel, the suction cup being attached to the end of said lens barrel with the transparent portion facing against the end of said lens barrel. Alternatively, said lens holding means may be an adhesive provided at the end of said lens barrel.

The image display device main body of the first form of the present invention may be used either for one lens or for both lenses. Likewise, the image display device main body of the second form of the present invention may be used either alone or as a combination of two of them.

When a single image display device main body or a single image display device is used, the image display device main body or the image display device is attached to the glass lens corresponding to either one of the eyes of the user. In such a case, blocking means may be provided on the glass lens of the glasses corresponding to the other eye, wherein the blocking means is expected to be positioned in front of the other eye of the user during the use of said image display device main body or said image display device. It serves to weaken the light incident to said other eye from a range generally corresponding to said display area or a block area which is a wider area including the area in question, of the field of vision of the other eye, than the light incident to said one eye from said display area.

The blocking means serves to solve the problem of binocular rivalry as described below.

When there is a single image display device main body or a single image display device used, the view of the surrounding environment may be presented to the other eye while the display means is presented to the one eye. In such a case, there arises the problem of binocular rivalry.

Binocular rivalry is a phenomenon in which visual perception alternates between different pieces of information presented to the right and left eyes. In general, the pieces of information presented to the right and left eyes have many common components although there are slight differences (e.g., visual parallax due to the distance between the eyes) from each other. Thus, two pieces of information are superimposed in the brain as a single piece of information and yield singleness of vision of "what is seen" On the contrary, when quite different pieces of information having little in common are presented to the right and left eyes, the brain cannot process these pieces of information well. Then, the brain may prioritize one eye's information and only that information is perceived to yield vision of what is seen. The image or scene based on the information perceived by the brain is seen, but the image or scene based on the information not perceived by the brain is not seen.

Such binocular rivalry occurs dominantly in the cases as described above where there is a single image display device main body or a single image display device used. In binocular rivalry, visual perception alternates or switches between the display means and the surrounding scene. Frequent occurrence of invisibility of the display means destroys the usefulness of the image display device. Slight perception of the display means would also result in significant fatigue of the user if binocular rivalry occurs frequently.

With the blocking means as described above, the field of vision of the eye facing against the blocking means is blocked by that blocking means, so that substantially no image is presented to the eye. Thus, the brain perceives only the information presented to the eye looking at the images produced by the display means. Therefore, the aforementioned problem of binocular rivalry can be eliminated.

The aforementioned blocking means may be provided on the glass lens so that it can be moved in the right-and-left direction when measured with said image display device main body or the image display device mounted on the body of the user. The blocking means is not necessarily movable in the right-and-left direction when the blocking means is expected to be positioned in front of the other eye during the use of the image display device main body or the image display device and is enough in size to weaken the light incident to said other eye from a range generally corresponding to said display area or a block area which is a wider area including the area in question, of the field of vision of the other eye, than the light incident to said one eye from said display area, even if the image display device main body or the image display device is moved. The blocking means may be a sheet-like material that can be removably adhered to the glass lens with an adhesive, or alternatively may be an opaque suction cup having sufficient dimensions to block the field of vision of the other eye.

### BRIEF DESCRIPTION OF THE DRAWINGS

Fig. 1 is a perspective view from diagonally forward upward of the entire image display device of a first embodiment;
Fig. 2 is a perspective diagram from the top showing the image display device main body shown in Fig. 1;
Fig. 3 is an exploded view showing the image display device main body shown in Fig. 1;
Fig. 4 is a perspective view showing the intermediate member shown in Fig. 1;
Fig. 5 is a side view showing how the image display device shown in Fig. 1 is used;
Fig. 6 is a view schematically showing what the user's eyes can see when he or she uses the image display device shown in Fig. 1;
Fig. 7 is a side view showing an intermediate member of an image display device of a modified version 2;
Fig. 8 is a side view showing how the image display device of the modified version 2 is used;
Fig. 9 is a perspective view showing another example of the intermediate member of the image display device of the modified version 2;
Fig. 10 is a side view showing an intermediate member of an image display device of a modified version 3;
Fig. 11 is a perspective view showing an image display device main body and an intermediate member of an image display device of a modified version 4;
Fig. 12 is a side view showing how the image display device of the modified version 4 is used;
Fig. 13A is a perspective view showing an image display device main body and an intermediate member of an image display device of a modified version 5;
Fig. 13B is a side view showing how the image display device of the modified version 5 is used;
Fig. 14 is a side view showing how an image display device of a modified version 6 is used;
Fig. 15 is a perspective view from diagonally forward upward of the entire image display device of a modified version 7;
Fig. 16 is a perspective view of glasses to which the image display device of the modified version is attached, wherein the glasses are seen from diagonally forward upward;
in Fig. 17, a partial view (A) schematically shows what the user's eye in front of which the image display device main body is positioned can see when he or she uses the image display device shown in Fig. 15, a partial view (B) schematically shows what the user's eye in front of which no image display device main body is positioned can see when he or she uses the same image display device, and a partial view (C) schematically shows what the user can recognize when he or she uses the same image display device;
Fig. 18 is a perspective view showing a blocking piece for an image display device of a modified version 8;
Fig. 19 is a perspective view from diagonally forward upward of the entire image display device according to a second embodiment;
Fig. 20 is a perspective diagram showing how the image display device shown in Fig. 19 is used;
Fig. 21A is a perspective view from diagonally backward upward showing the entire image display device of a third embodiment;
Fig. 21B is a perspective view showing how a suction cup of the image display device shown in Fig. 21A can be adhered;
Fig. 22 is a perspective view from diagonally backward upward of an image display device of a fourth embodiment;
Fig. 23 is a plan cross-sectional view schematically showing a configuration of an image display device of a fifth embodiment;
Fig. 24 is a perspective view from diagonally forward upward of the entire image display device of a sixth embodiment; and
Fig. 25 is a perspective view from diagonally forward upward showing an image display device of a modified version of the image display device of the sixth embodiment.

### BEST MODES FOR CARRYING OUT THE INVENTION

Preferred first through sixth embodiments of the present invention are described in detail below with reference to the drawings.

It should be noted that components shared with the embodiments are designated with the same reference numbers and symbols, and will not be repeatedly described in some cases.

### <<First Embodiment>>

An image display device 1 according to a first embodiment corresponds to a first one of the present invention.

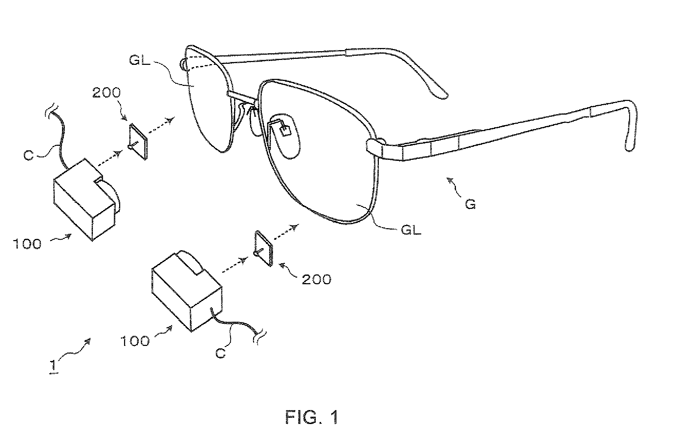

The image display device 1 comprises, as shown in Fig. 1, two image display device main bodies 100 that are to be fixed to a smooth surface of the respective glass lenses GL of glasses G. It also comprises two intermediate members 200 that are used to fix the respective image display device main bodies 100 to the smooth surface of the glass lenses GL. Fig. 1 is a perspective view from diagonally forward upward of the image display device 1 according to the first embodiment (in the "BEST MODES FOR CARRYING OUT THE INVENTION", the term "ahead" or "forward" as used herein refers to the side far away from the face of a user when he or she wears the glasses).

The glasses G in this embodiment, which are used in combination with the image display device 1, are a commercially available ready-made product. In addition, the glasses G shown in Fig. 1 include frames that are fitted around glass lenses GL. Detailed structure thereof is not specifically limited. The glasses G may be so-called frameless glasses having no such frames. The glass lenses GL may be farsightedness ones, nearsightedness ones, or bifocal ones. Alternatively, they may be simple plates made of a glass or resin material. In other words, the glasses G may be nonprescription glasses, as long as they have the glass lenses GL.

Each of the image display device main body 100 is to be positioned in front of one of the eyes of the user while using the image display device 1. It serves to direct an imaging light to form a predetermined image onto the eye positioned against it. The user can view the predetermined image with the aforementioned predetermined image included within a display area that is a part of the field of vision of the right and left eyes. In this embodiment, the two image display device main bodies 100 are bilaterally symmetrical with each other.

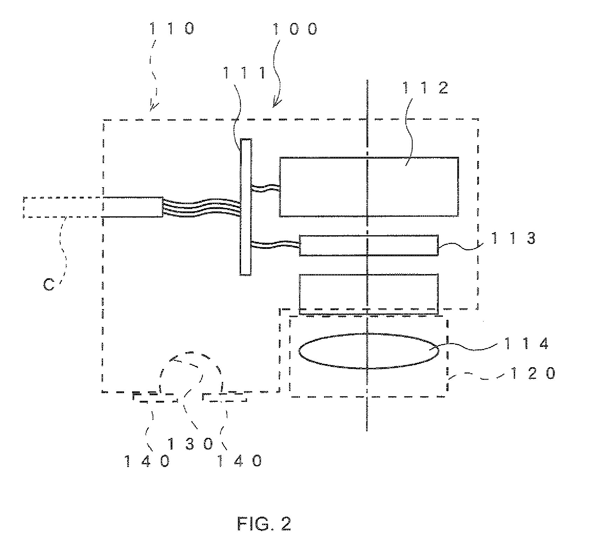

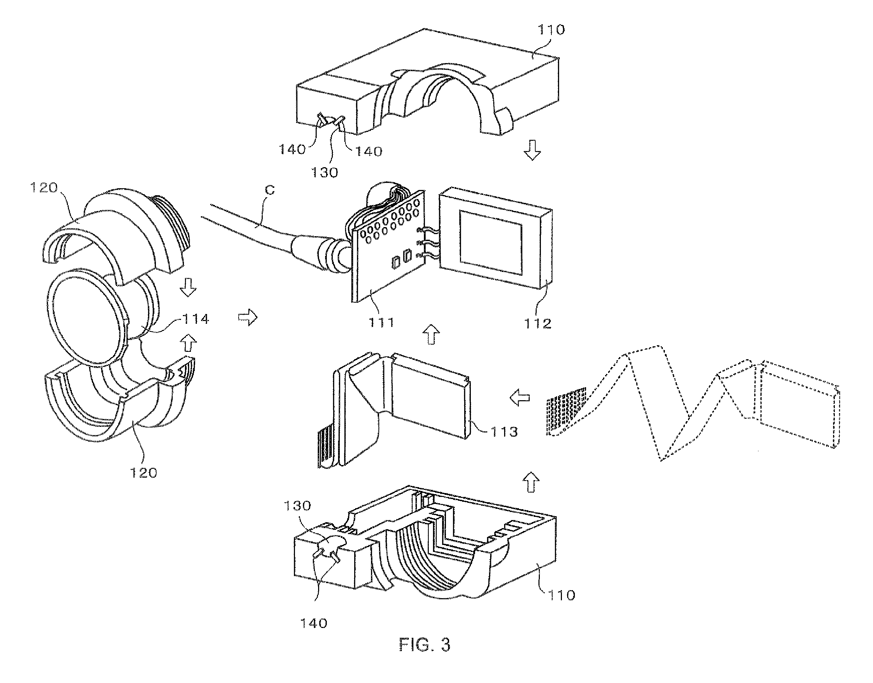

The image display device main body 100 has a configuration as shown in a perspective diagram in Fig. 2 and an exploded view in Fig. 3.

The image display device main body 100 has a casing 110 having a generally cuboid shape. The casing 110 may be made of but not limited to, a resin material.

A lens barrel 120 is provided on the back surface of the casing 110. The lens barrel 120 has a generally hollow cylindrical shape.

In addition, the back surface of the casing 110 has a hole 130 formed therein. The hole 130 has a hollow space of a predetermined extent. Four plate-shaped elastic pieces 140 are attached along the opening edge of the hole 130 so that they cover the opening of the hole 130. The elastic pieces 140 have elasticity and can be bent in a direction of the thickness thereof to a certain degree.

Both image display device main bodies 100 are connected to the cable C. The cable C is, as described below, for transmitting image signals to the image display device main body 100. The cable C may be fixed to the temples of the glasses G by caulking it with, for example, a member having a generally C shape in cross section (this member is not shown). The cable C is connected to the outer surface of the image display device main body 100 (the surface that comes on the sides of the user's face when the image display device main body 100 is mounted on the glasses G).

In addition, the casing 110 has a conversion board 111, a backlight unit 112, and a liquid crystal display 113 contained therein.

The lens barrel 120 has a magnifying lens 114 contained therein.

The conversion board 111 is connected to the cable C. It is for converting an image signal supplied from the outside through the cable C into a signal that can be displayed on the liquid crystal display 113 to produce an image on the liquid crystal display 113.

More specifically, the conversion board 111 receives image signals such as video signals and RGB signals that are supplied from the outside of the image display device main body 100 through the cable C to produce an image based on the image signal on the liquid crystal display 113. It should be noted that the conversion board 111 is not necessarily provided inside the image display device main body 100. All or a part of it may be provided outside the image display device main body 100. In addition, the conversion board 111 may receive image signals in a wireless manner without passing through the cable C. The conversion board 111 may have a television tuner. In this case, the conversion board 111 receives common television airwaves and decodes them to produce television image on the liquid crystal display 113. The image produced on the liquid crystal display 113 by the conversion board 111 is not limited thereto. It may possibly range from images that are reproduced based on image data recorded on a recording medium such as a DVD as well as images that are reproduced based on image data generated by a computer such as a personal computer or a gaming device.

The backlight unit 112 includes a backlight that illuminates the liquid crystal display 113 from the back and a control circuit for controlling the backlight, in which the backlight is turned on while being controlled.

The liquid crystal display 113 is for producing thereon a predetermined image, which is either a video image or a still image, under the control of the conversion board 111.

The magnifying lens 114 is for enlarging imaging lights of the images produced on the liquid crystal display 113. The magnifying lens 114 is not necessarily a single lens. It may be composed of a plurality of lenses. The magnifying lens 114 in this embodiment is allowed to move back and forth (along the direction of the optical axis) by means of rotating the lens barrel 120. The back-and-forth movement of the magnifying lens 114 is for changing the position where imaging lights from the liquid crystal display 113 focus to form an image. Therefore, the aforementioned image can clearly be produced on the retina at the back of the eye of the user regardless of the user's vision or even when the power of the glass lenses GL in the glasses G that the user uses is not suitable for the eyes of the user. Details of how the magnifying lens 114 is moved back and forth are not specifically limited. However, it may be achieved by using a double-structured lens barrel 120 in which the outer surface of the inner barrel and the inner surface of the outer barrel are threaded for the screw-threaded fixation, in which the outer barrel of the lens barrel 120 is fixed to the casing 110 and the magnifying lens 114 is fixed to the inner surface of the inner barrel of the lens barrel 120. In this embodiment, the magnifying lens 114 can be moved back and forth by rotating the lens barrel 120. However, the movement of the magnifying lens 114 along the optical axis may be achieved by using other means. In addition, a plurality of lens barrels 120 that are located at different positions on the optical axis of the magnifying lens 114 may be provided in a manner that it can be attached to and removed from the casing 110 . The magnifying lens 114 may be changed for each one of the lens barrels 120 depending on, for example, the vision of a user.

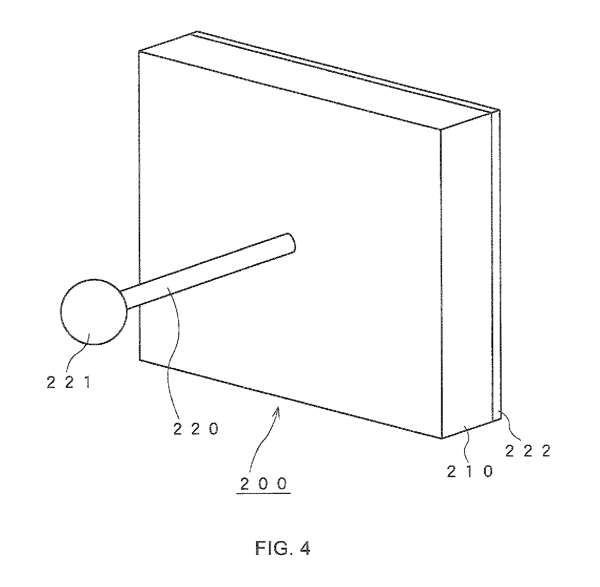

Each of the two intermediate members 200 includes, as shown in Fig. 4, a plate-shaped base 210 and a rod-shaped projection 220 that extends ahead from the front surface of the base 210. The base 210 in this embodiment has a square shape of generally 5 mm by 5 mm. A spherical sphere piece 221 is provided at the end of the projection 220. The sphere piece 221 has such a diameter that it can be inserted into the aforementioned hole with some gaps kept inside the hole.

An adhesive layer 222, which is formed of a layered adhesive, is provided on the back surface of the base 210. The adhesive layer 222 is provided so that the intermediate member 200 can be fixed to the glass lens GL when the surface of the adhesive layer is in contact with the smooth surface of the glass lens GL. As described below, the image display device main body 100 is attached to the intermediate member 200 after being fixed to the glass lens GL. The adhesive layer 222 has such adhesion that the intermediate member 200 with the image display device main body 100 attached thereto can be stably fixed to the glass lens GL. The adhesive layer 222 can be adhered to and removed from the glass lens GL in this embodiment. In other words, the adhesive layer 222 can hold the intermediate member 200 on the glass lens GL as long as a large impact or a strong force is not applied to the intermediate member 200. However, the adhesion thereof is such that the intermediate member 200 can be removed from the glass lens GL with a strong force applied thereto.

How the image display device 1 in this embodiment is used is described now.

To use the image display device 1, the image display device main body 100 is attached to the smooth surface of the glass lens GL of the glasses G. In this embodiment, the image display device main body 100 is attached to the front surface of the glass lens GL.

In order to attach the image display device main body 100 to the front surface of the glass lens GL, the intermediate member 200 is attached to the front surface of the glass lens GL. This attachment is achieved by contacting the adhesive layer 222 of the intermediate member 200 to an appropriate position on the glass lens GL and pressing it.

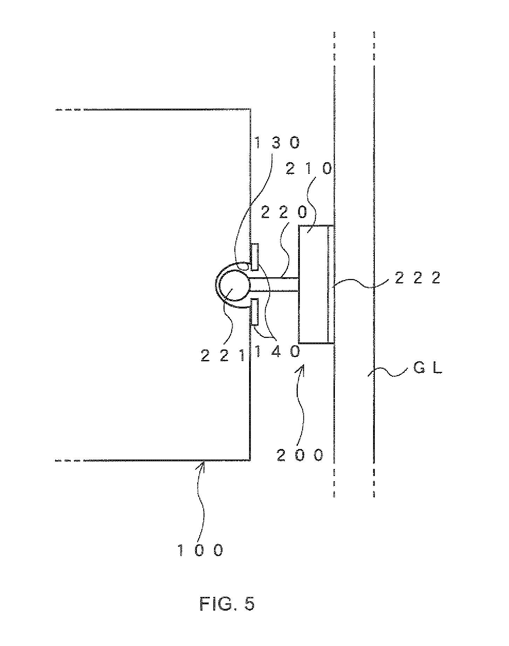

Then, the sphere piece 221 at the end of the projection 220 of the intermediate member 200 attached to the glass lens GL is inserted into the hole 130 formed in the image display device main body 100. More specifically, the sphere piece 221 is inserted into the gap between the elastic pieces 140 against the elastic force of the elastic pieces 140 to thereby insert the sphere piece 221 into the hole 130. The sphere piece 221 held within the hole 130 is shown in Fig. 5 . The end of the sphere piece 221 is in contact with the bottom of the hole 130 and the base of it is in contact with the elastic piece 140. This temporarily holds the sphere piece 221 within the hole 130 because of the friction with the inner surface of the hole 130. Thus, the image display device main body 100 is fixed to the front surface of the glass lens GL through the intermediate member 200.

The aforementioned operation is performed for the glass lenses GL for both right and left eyes.

When the both image display device main bodies 100 are attached to their respective glass lenses GL, the cable C is fixed to the temple of the glasses G that is closer to the glass lens GL where the subject image display device main body 100 is placed.

Each of the image display device main bodies 100 in this embodiment may be slightly swing-moved in a desired direction, such as upwards and downwards, rightwards and leftwards, or diagonal sides to sides between them, from a fixed point of the sphere piece 221 on the front surface of the glass lens GL. The user can swing the image display device main body 100 to adjust the angle of the image display device main body 100 when the lens barrel 120 is not facing to the pupils of his or her eyes, in other words, when the optical axis of the magnifying lens 114 does not passes through the pupils of his or her eyes.

The magnifying lens 114 in this embodiment can move backwards and forwards when the lens barrel 120 is rotated as described above. The user can move the magnifying lens backwards and forwards to move the magnifying lens 114 to a position where images are clearly visible, when necessary.

The adjustment of the angle of the image display device main body 100 and the movement of the magnifying lens 114 may be performed after images are produced.

When the aforementioned operations have been done, images are produced by the image display device main body 100.

More specifically, something that is connected to the cable C (e.g., a DVD player) is turned on and necessary preparations are done. Then, image signals are supplied to the image display device main body 100 through the cable C. The image signal is supplied to the liquid crystal display 113 through the conversion board 111 in each image display device main body 100. The liquid crystal display 113 produces images based on the image signal. The imaging light for the image, which is the light from the backlight contained in the backlight unit 112, is directed to each eye of the user through the magnifying lens 114 to form an image on the eyes of the user.

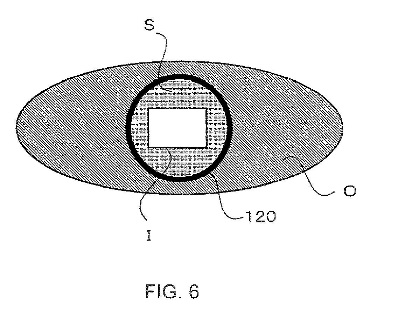

Each eye of the user gets a vision of the image as shown in Fig. 6.

In Fig. 6, I represents an image. The image I is generally seen to be floated in a dark space S. The range where the image I is seen to be present corresponds to the display area of the present invention. The space S surrounding the image I corresponds to the pupil of the magnifying lens 114. The end of the lens barrel 120 is blurred in the surrounding of the space S. The end of the lens barrel 120 is blurred because it is located closer to the user's eyes than the near point of the user's eyes. In addition, the surrounding environment O is seen around the lens barrel 120. The edge of the surrounding environment O matches the field of vision of the user's eyes. The display area in this embodiment is far smaller than 1/3 of the field of vision of the eye of the user that looks at the image I. The angle of view of the display area is about 20 degrees in the right and left directions in this embodiment.

In this embodiment, the user can get the view of the surrounding environment without moving the line of sight while looking at the display area. The user may get more information about the view of the surrounding environment when he or she moves the line of sight.

The user see the image I with both eyes while looking at the images I in the display area with the right and left eyes within the fields of vision of the right and left eyes, respectively.

### <Modification of the Adhesive Layer 222 of the Intermediate Member 200>

Now, examples of the image display device according to the first embodiment in which the adhesive layer 222 of the intermediate member 200 is modified (modified versions 1 to 3) are described.

### [Modified Version 1]

An image display device according to a modified version 1 is basically identical to the image display device 1 in the first embodiment.

On the back surface of the base 210 of the intermediate member 200 in the first embodiment, the adhesive layer 222 is provided to fix the intermediate member 200 to the glass lens GL by contacting the surface thereof with the smooth surface of the glass lens GL. The adhesive layer 222 is provided so as to allow removable attachment on the glass lens GL in the first embodiment.

The intermediate member 200 of the image display device in the modified version 1 is similar to the one shown in Fig. 4. However, the adhesive layer 222 is different from the one in the first embodiment. Instead, it is for the permanent adhesion to the glass lens GL. This is the difference of the modified version from the image display device in the first embodiment. In this case, the intermediate member 200 is kept adhered on the glass lens GL even when the image display device 1 is not used and the glasses G are used in a normal way. Therefore, it is preferable that the intermediate member 200 is as small as possible in order to prevent the intermediate member 200 from blocking the field of vision of the user when the glasses G are used in a normal way. For example, it is preferable that the length of each side of the base 210 is about 3 mm.

### [Modified Version 2]

An image display device in a modified version 2 is basically identical to the image display device 1 in the first embodiment.

On the back surface of the base 210 of the intermediate member 200 in the first embodiment, the adhesive layer 222 is provided as described above.

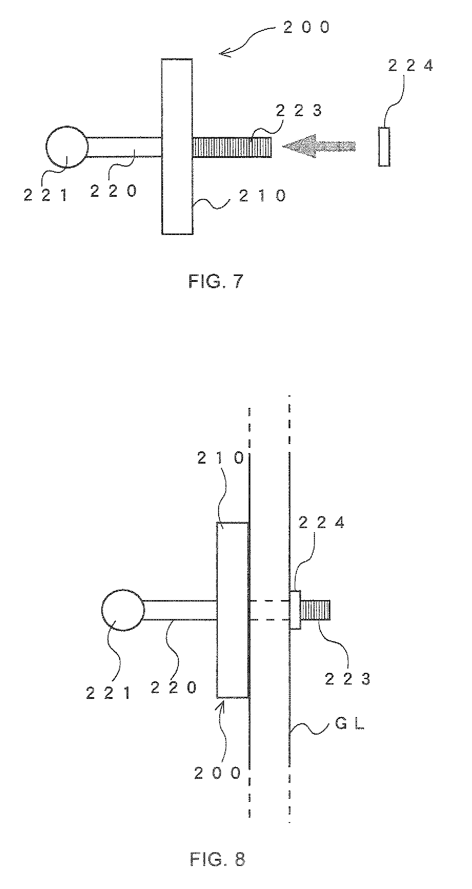

The intermediate member 200 of the image display device in the modified version 2 includes a rod-shaped member 223 and a fixture member 224 as shown in Fig. 7, in place of the adhesive layer 222. This is the difference of the image display device according to the modified version 2 from the first embodiment. The rod-shaped member 223 and the fixture member 224 are for the permanent fixture of the intermediate member 200 to the glass lens GL.

The rod-shaped member 223 is a member having a rod shape that passes through the bore formed in the glass lens GL at a predetermined position and extends at right angles from the back surface of the base 210. The rod-shaped member 223 is longer by several millimeters than the thickness of the glass lens GL and has threads formed in the outer surface thereof. The fixture member 224 is a nut of a thickness of about 1 mm having threads in the inner surface thereof. The nut can be screwed onto the rod-shaped member 223 that passes through the glass lens GL and extends from the back surface of the glass lens GL.

The intermediate member 200 in this modified version 2 is fixed to the glass lens GL as shown in Fig. 8 by screwing the fixture member 224 onto the rod-shaped member 223 that is passed through the bore formed in the glass lens GL.

The rod-shaped member 223 may be fixed to the glass lens GL by using, for example, an adhesive without using the fixture member 224. In this case, the rod-shaped member 223 does not necessarily have threads formed in the outer surface thereof. In addition, the rod-shaped member 223 to be fixed to the glass lens GL with an adhesive is not necessarily passed through the glass lens GL. In this case, the rod-shaped member 223 may be shorter than the thickness of the glass lens GL and the a hole corresponding to the diameter and length of the rod-shamed member 223 is formed in the front surface of the glass lens GL, and the rod-shamed member 223 may be inserted into the hole and adhered therein with the adhesive for example. Thus, the rod-shaped member 223, and in turn the intermediate member 200, can be fixed to the glass lens GL.

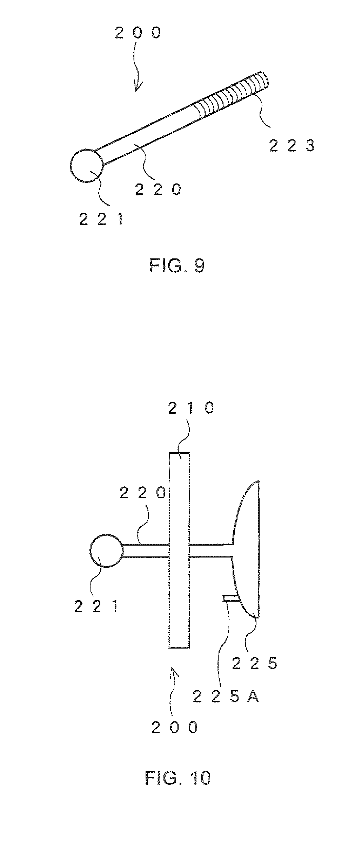

Furthermore, when the intermediate member 200 includes the rod-shaped member 223, the intermediate member 200 may be provided without the base 210. In this case, the intermediate member 200 may be provided as shown in Fig. 9 for example.

### [Modified Version 3]

An image display device in a modified version 3 is basically identical to the image display device 1 in the first embodiment.

On the back surface of the base 210 of the intermediate member 200 in the first embodiment, the adhesive layer 222 is provided as described above.

The intermediate member 200 of the image display device in the modified version 3 includes a suction cup 225 as shown in Fig. 10 in place of the adhesive layer 222. This is the difference of the image display device of the modified version 3 from the first embodiment. The suction cup 225 is for removable attachment of the intermediate member 200 to the glass lens GL.

The suction cup 225 in this embodiment is made of an elastic material such as a resin. It should be noted that the suction cup 225 may be made of an elastic rubber material. On the outside of the suction cup 225, a rod-shaped handle 225A is provided. The handle 225A is used to detach the suction cup 225 stuck to the glass lens GL from the glass lens GL. When the user picks it with his or her fingers and pulls it, the suction cup 225 can easily be detached from the glass lens GL.

### <Modification of the Extended Piece 220 of the Intermediate Member>

Now, examples of the image display device according to the first embodiment in which the projection 220 of the intermediate member 200 is modified (modified versions 4 to 6) are described.

### [Modified Version 4]

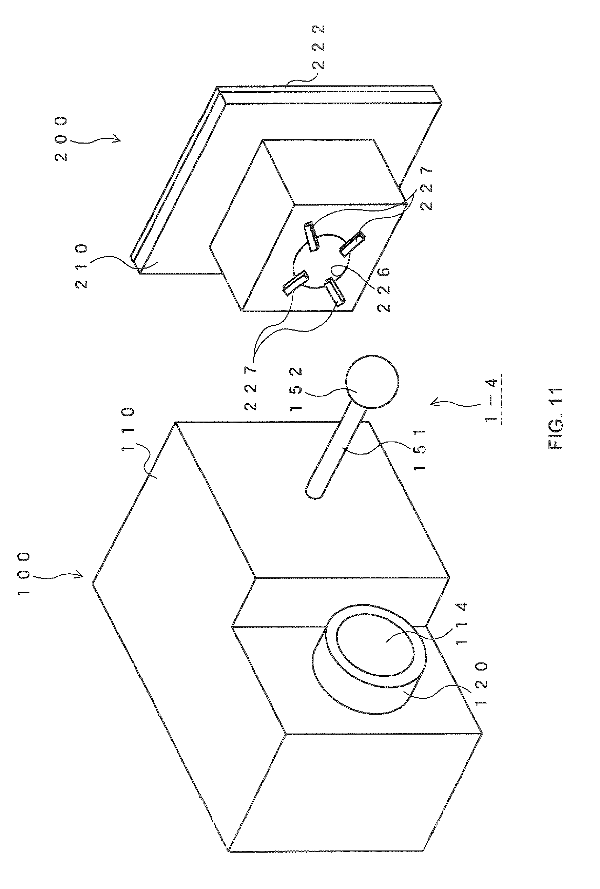

An image display device 1-4 according to a modified version 4 is as shown in Fig. 11 and is basically identical to the image display device 1 in the first embodiment.

On the front surface of the base 210 of the intermediate member 200 in the first embodiment, the projection 220 is provided as described above.

The intermediate member 200 of the image display device 1-4 in the modified version 4 includes a hole 226 that is similar to the one formed in the back surface of the image display device main body 100 of the first embodiment, in place of the projection 220. The hole 226 has a hollow space of a predetermined extent. In order to provide such a hollow space, the base 210 is formed to have an enough thickness. Elastic pieces 227, which are similar to the elastic pieces 140 attached along the hole 130 in the image display device main body 100 of the first embodiment, are provided near the opening of the hole 226. Each elastic piece 227 can be bent in a direction of the thickness thereof to a certain degree.

The image display device main body 100 that can be used in combination with the intermediate member 200 having such hole 226 has a projection 151 on the back surface thereof that is similar to the projection 220 provided on the intermediate member 200 in the first embodiment. The projection 151 has a rod-like shape and a spherical sphere piece 152 is provided at the end thereof. The sphere piece has such dimensions that it can be inserted into the aforementioned hole 226 with some gaps kept inside the hole.

In brief, in the image display device 1-4 in the modified version 4, the positional relation between the hole 130, which is provided in the image display device main body 100 to hold the image display device main body 100 and the intermediate member 200 in the image display device 1 of the first embodiment with each other, and the projection 220 provided on the intermediate member 200 is reversed.

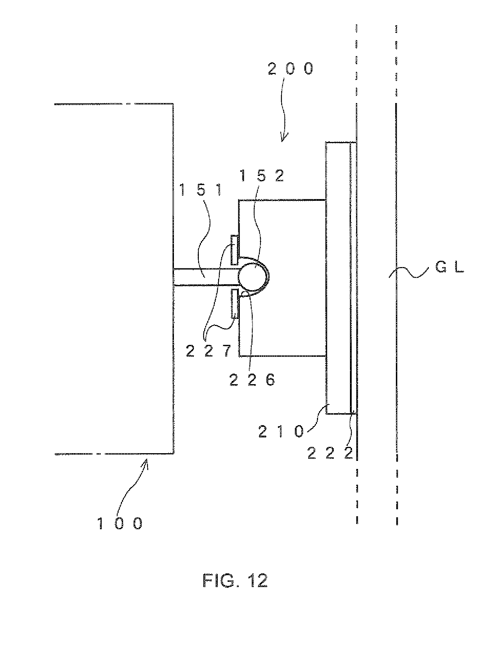

In the image display device main body 100 of the image display device 1-4, the sphere piece 152 at the end of the projection 151 provided thereon is inserted into a hole 226 formed in the intermediate member 200. It is removably attached to the intermediate member 200 as in the first embodiment. A cross section of the image display device main body 100 and the intermediate member 200 is schematically shown in Fig. 12 in which they are engaged with each other by inserting the sphere piece 152 of the projection 151 into the hole 226.

### [Modified Version 5]

An image display device 1-5 in a modified version 5 is basically identical to the image display device 1 in the first embodiment.

On the front surface of the base 210 of the intermediate member 200 in the first embodiment, the projection 220 is provided as described above.

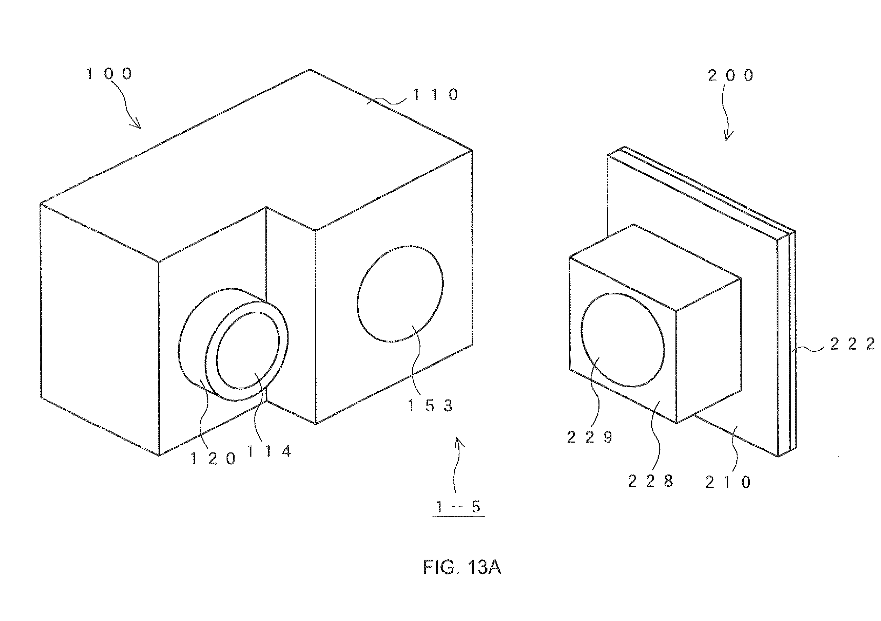

The intermediate member 200 of the image display device 1-5 in the modified version 5 includes a platform 228 as shown in Fig. 13A instead of it. The platform 228 has a convex surface 229. The convex surface 229 is projected ahead of the intermediate member 200. The convex surface 229 forms a part of a predetermined spherical surface.

The image display device main body 100 that is used in combination with the intermediate member 200 having such the platform 228 includes a concave surface 153 on the back surface thereof. The concave surface 153 has a shape corresponding to the contour of the aforementioned convex surface 229.

The convex surface 229 is adapted to attract the concave surface 153 towards it or vise versa with magnetic force. For example, members having the convex surface 229 and the concave surface 153 may be both made of a magnet. Alternatively, one of the members is made of a magnet and the other member may be made of a metal attracted towards the magnet. Thus, the convex surface 229 may attract the concave surface 153 towards it or vise versa with magnetic force.

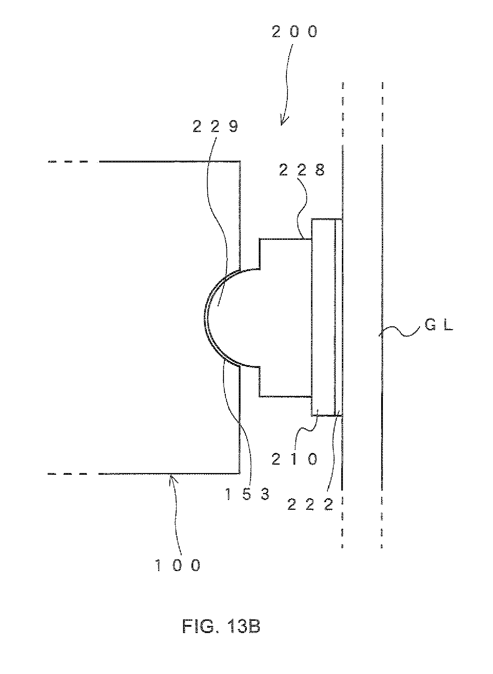

In the image display device 1-5 in this modified version 5, as shown in Fig. 13B, the convex surface 229 and the concave surface 153 are adhered to each other to removably fix the intermediate member 200 and the image display device main body 100. With the intermediate member 200 and the image display device main body 100 fixed to each other, the concave surface 153 is slid with respect to the convex surface 229. Thus, the angle of the image display device main body 100 relative to the intermediate member 200 can be changed in the up-and-down or right-and-left direction.

### [Modified Version 6]

An image display device in a modified version 6 is basically identical to the image display device 1 in the first embodiment.

On the front surface of the base 210 of the intermediate member 200 in the first embodiment, the projection 220 is provided as described above.

The intermediate member 200 of the image display device in the modified version 6 includes the platform 228 instead of it. The platform 228 has a concave surface 230. The concave surface 230 is a dent with an opening facing forward of the intermediate member 200. The concave surface 230 has a shape corresponding to the contour of the convex surface 154 described below.

The image display device main body 100 that is used in combination with the intermediate member 200 having such the platform 228 includes the convex surface on the back surface thereof. The convex surface 154 forms a part of a predetermined spherical surface.

The concave surface 230 is adapted to attract the convex surface 154 towards it or vise versa with magnetic force. For example, members having the concave surface 230 and the convex surface 154 may be both made of a magnet. Alternatively, one of the members is made of a magnet and the other member may be made of a metal attracted towards the magnet. Thus, the concave surface 230 may attract the convex surface 154 towards it or vise versa with magnetic force.

In brief, the modified version 6 corresponds to the reverse in positional relation between the convex surface 229 and the concave surface 153 in the modified version.

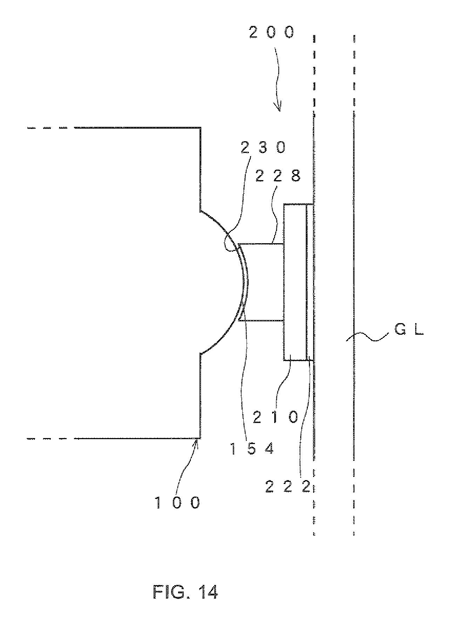

In the image display device in the modified version 6, the concave surface 230 and the convex surface 154 are adhered to each other as shown in Fig. 14 to removably fix the intermediate member 200 and the image display device main body 100. With the intermediate member 200 and the image display device main body 100 fixed to each other, the convex surface 154 is slid with respect to the concave surface 230. Thus, the angle of the image display device main body 100 relative to the intermediate member 200 can be changed in the up-and-down or right-and-left direction.

### <When a single intermediate member 200 and a single image display device main body are used>

Now, an example of the image display device according to the first embodiment is described for a case where a single intermediate member 200 and a single image display device main body is used (modified versions 7 to 8).

### [Modified Version 7]

An image display device 1-7 in a modified version 7 is basically identical to the image display device 1 in the first embodiment.

The difference lies in the following.

The image display device 1 in the first embodiment includes two pairs of the image display device main bodies 100 and the intermediate members 200. The image display device main bodies 100 are attached through the intermediate members 200 to each of the two glass lenses GL of the glasses G corresponding to the right and left eyes of the user.

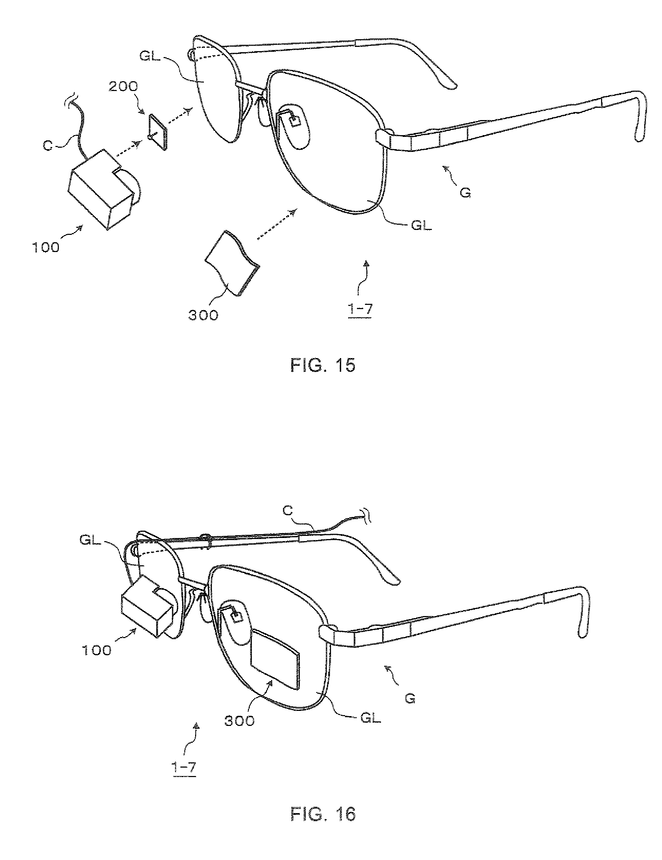

On the contrary, an image display device 1-7 in a modified version 7 has only one pair of the intermediate member 200 and the image display device main body 100 as shown in Fig. 15. In addition, the image display device 1-7 includes a blocking piece 300 which is not provided in the image display device 1 in the first embodiment. The blocking piece 300 is not essential but it allows a user to see images more easily.

The image display device main body 100 and the intermediate member 200 in the image display device 1-7 in the modified version 7 are similar in configuration to the one in the first embodiment. However, the configuration of the image display device main body 100 and the intermediate member 200 may be modified as disclosed in the modified versions 1 to 6.

The image display device main body 100 in the modified version 7 is fixed to the glass lens GL in a manner similar to the one described in the first embodiment. This fixation is performed for either one of the glass lenses GL corresponding to the right or left eye of the user. The image display device main body 100 may be attached to either one of the two glass lenses GL in the glasses G. However, it is typically attached to the glass lens GL on the side corresponding to the eye with which the user can see the images from the image display device main body 100 more easily.

The blocking piece 300 is attached to the glass lens GL where the image display device main body 100 is not attached. The blocking piece 300 corresponds to the blocking means of the present invention.

The blocking piece 300 is attached to the glass lens GL where no image display device main body 100 is attached when the image display device 1-7 is used. The blocking piece 300 has a function to weaken the light directed to the area corresponding to the display area on the eye on the side where the image display device main body 100 is placed in front of it or a wider area (blocking range) including it within the field of vision of the eye on the side corresponding to the glass lens GL where it is attached the light directed to the display area on the eye on the side where the image display device main body 100 is placed in front of it.

The blocking piece 300 in the modified version 7 is provided as an opaque, soft and flexible sealing material made of a resin containing, for example, a black pigment in order to cuts out the light that enters the blocking range from outside. The blocking piece 300 has an adhesive which is not shown and is applied over the entire surface thereof. The adhesive allows the removable attachment of it to the glass lens GL.

Such the image display device 1-7 is used in the following manner.

To use the image display device 1-7, some preparations are performed such as the image display device main body 100 is fixed to one of the glass lenses GL of the glasses G and the blocking piece 300 is fixed to the other. How the image display device main body 100 is fixed to the glass lens GL and how the angle is adjusted are fundamentally identical to the case of the first embodiment. The magnifying lens 114 may be adjusted in position, the cable C may be attached to the temple of the glasses G, and the angle of the image display device main body 100 may be adjusted. The image display device main body 100 and the blocking piece 300 that are fixed to the glasses G are shown in Fig. 16.

After the aforementioned preparations, images are produced by the image display device main body 100.

More specifically, something that is connected to the cable C (e.g., a DVD player) is turned on and necessary preparations are done. The imaging light for an image is directed to the eye corresponding to the glass lens GL on which the image display device main body 100 is attached, through the magnifying lens 114 contained in the image display device main body 100 to form an image on the eye. On the other hand, the eye corresponding to the glass lens GL on which the blocking piece 300 is attached gets a view of the blocking piece 300.

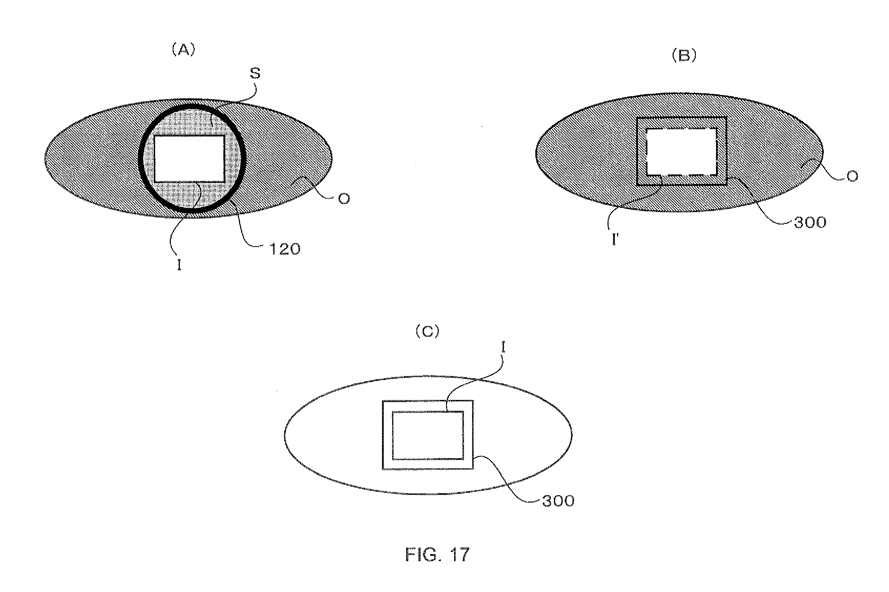

Of the eyes of the user, the one on which the imaging light from the image display device main body 100 focuses gets the image as shown in Fig. 17(A).

This is similar to the one described in conjunction with Fig. 6.

On the other hand, of the eyes of the user, the one in front of which the blocking piece 300 is placed gets a blurred view of the blocking piece 300 as shown in Fig. 17(B). The blocking piece 300 is blurred because the blocking piece 300 is located closer to the user's eyes than the near point of the user's eye looking at the blocking piece 300. The eye of the user looking at the blocking piece 300 gets mainly a view of the surrounding environment O. The blocking piece 300 described above is visible black within the field of vision of the eye of the user looking at the blocking piece 300 so that the area I' corresponding to the display area I of the eye on which the imaging light focuses. This means that the light directed to the user's eye looking at the blocking piece 300 from the area where the blocking piece 300 is present is weaker than the light directed to the eye on which the imaging light focuses from the area where the image I is visible. The I' is illustrated for the purpose of description. The user's eye looking at the blocking piece 300 does not get the view of it. Instead, the entire portion including I' is visible black as the blocking piece 300.

In this embodiment, the user can get the view of the surrounding environment without moving the line of sight while looking at the blocking piece 300. Of course, the user may get more information about the view of the surrounding environment when he or she moves the line of sight.

In this case, the image seen from the eye of the user on which the imaging light focuses and the blocking piece 300 seen from the eye of the user looking at the blocking piece 300 are combined in mind and recognized as shown in Fig. 17(C).

In other words, the image I is seen floating on the black blocking piece 300. In this embodiment, when comparing the ranges corresponding to the display area for the image I within the field of vision of the eye of the user on which the imaging light focuses, and the display area within the field of vision of the eye of the user looking at the blocking piece 300, the photo-stimulation to the eye of the user on which the imaging light focuses from the display area is greater than the photo-stimulation to the eye of the user looking at the blocking piece 300 from the corresponding area. Thus, confliction between the fields of vision hardly occurs.

In this state, the user can enjoy images.

It should be noted that the user can adjust the position of the image display device main body 100 or adjust the position of the blocking piece 300 while looking at the image I so that the image I is visible floating on the black blocking piece 300.

### [Modified Version 8]

An image display device in a modified version 8 is basically identical to the image display device 1 in the modified version 7.

The one with a modification of the blocking piece 300 of the modified version 7 corresponds to the image display device in the modified version 8.

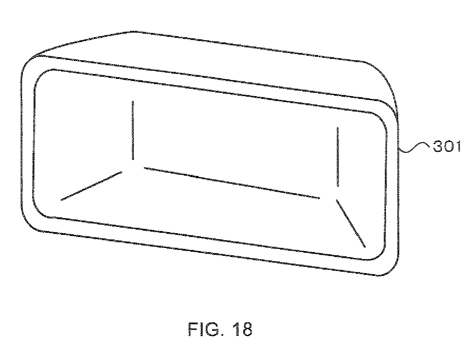

The blocking piece 301 in the modified version 8 is formed of, as shown in Fig. 18, a suction cup. The suction cup is made of a soft and flexible material such as a resin or a rubber. The soft and flexible material is opaque in this modified version 8.

The blocking piece 301 achieved as the suction cup can be removably attached to the glass lens GL. Like the blocking piece 300 in the modified version 7, the blocking piece 301 blocks the field of vision of the eye on the side corresponding to the glass lens GL on which it is attached.

### «Second Embodiment »

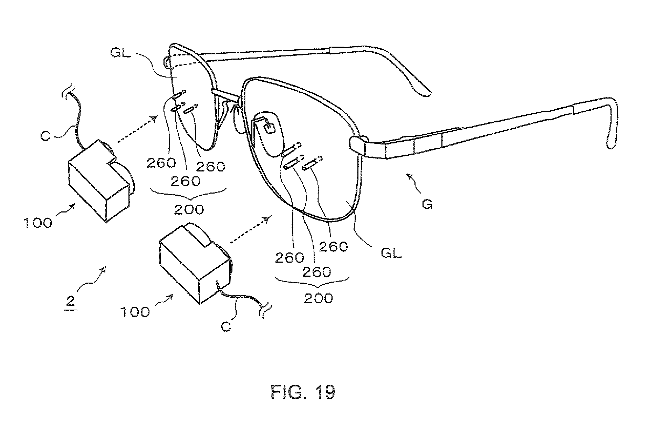

An image display device 2 according to a second embodiment is as shown in Fig. 19.

An image display device 2 in the second embodiment includes an image display device main body 100. The image display device main body 100 in the second embodiment is the same as the image display device main body 100 in the modified version 6 of the aforementioned first embodiment.

The image display device 2 in the second embodiment also includes an intermediate member 200. The intermediate member 200 in this embodiment is made up of three pins 260 made of a metal or a magnet. Each of these pins 260 has a length of about three times longer than the thickness of the glass lens GL. It is passed through the glass lens GL and fixed to the glass lens GL. Three pins 260 are fixed to each of the two glass lenses GL in this embodiment.

The pins 260 are all formed like a rod and are fixed to the glass lens GL so that each of them is slightly, e.g., 3mm, projected ahead from the glass lens GL. The pins 260 may be fixed to the glass lens GL by using any means without limitation. In this embodiment, the pin 260 is inserted into a bore formed in the glass lens GL through the lens and the pin 260 is adhered within the bore with an adhesive to fix the pin 260 to the glass lens GL. The pin 260 is very small and is located at a position closer to the eye of the user than the near point of the eye of the user. Therefore, in effect, it does not block the field of vision of the user even when the user wears the glasses G with these pins 260.

The three pins 260 fixed to each of the glass lenses GL are fixed at three positions on a virtual circumference, that is, positions corresponding to predetermined vertexes of an equilateral triangle in this embodiment.

How the image display device 2 in this embodiment is used is described now.

In the image display device 2 in this embodiment, the intermediate member 200 (pins 260) are fixed first to the glass lens GL as described above.

Then, the image display device main body 100 is fixed onto each of the intermediate members 200.

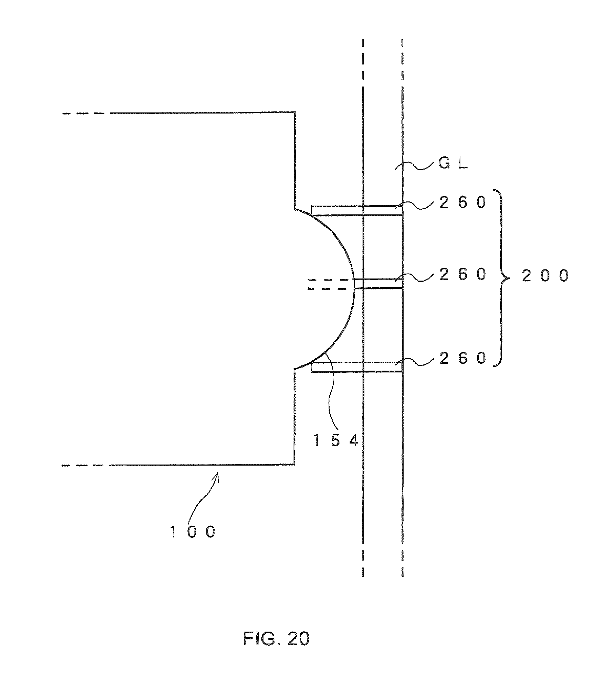

The image display device main body 100 has a convex surface 154 on the back surface thereof. The convex surface 154 is inserted among the three pins 260 to fix the image display device main body 100 to the intermediate member 200. The convex surface 154 touches internally with the three pins 260 as shown in a perspective diagram in Fig. 20. The pins 260 are adapted to attract the convex surface 154 towards them or vise versa with magnetic force. Therefore, when the pins 260 are contacted with the convex surface 154 as described above, the convex surface 154 and the pins 260 are temporarily engaged with each other. Thus, the image display device main body 100 is fixed to the intermediate member 200.

The fixation of the image display device main body 100 to the intermediate member 200 is done for each of the two glass lenses GL.

In this state, positional adjustment of the magnifying lens 114, the fixation of the cable C to the temple of the glasses G, and the angular adjustment of the image display device main body 100 are made. As described above, the convex surface 154 are merely adhered to the three pins 260 in a contact relation. Thus, the angle of the image display device main body 100 may be adjusted just by means of sliding the convex surface 154 relative to the pins 260. The user may adjust the angle of the image display device main body 100 so that images can be seen more clearly.

After the aforementioned preparations, images are produced by the image display device main body 100.

More specifically, something that is connected to the cable C (e.g., a DVD player) is turned on and necessary operations are done. As a result, the user can get the view of images similar to the one in the first embodiment.

When there is no need for viewing the image, the image display device main body 100 is removed from the intermediate member 200.

It should be noted that the image display device 2 of the second embodiment includes two pairs of the intermediate members 200 and the image display device main bodies 100. The both eyes can get images with the image display device main bodies 100 attached to the respective glass lenses GL but it may be a type in which images are seen with either one of the eyes as described in the modified versions 7 and 8 of the first embodiment.

In this case, the intermediate member 200 is enough to be attached to only the glass lens GL on which the image display device main body 100 is expected to be attached. It should be noted that when the image display device 2 is used, then the blocking piece 300, 301 as described in conjunction with the modified versions 7 and 8 of the first embodiment may be attached to the glass lens GL on the side where no intermediate member 200 is attached.

### <<Third Embodiment>>

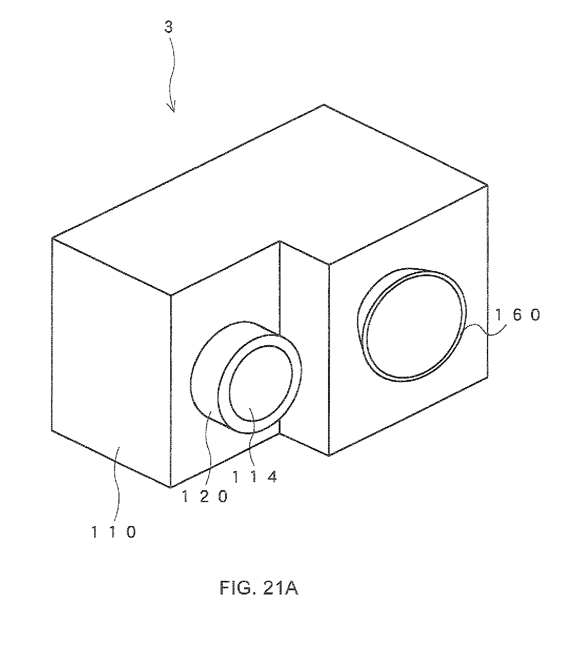

An image display device 3 according to a third embodiment is as shown in Fig. 21A. The image display device 3 is similar in configuration to the most part of the image display device 1 of the first embodiment but it does not include the intermediate member 200.

The image display device 3 includes, as shown in Fig. 21A, a casing 110 that is similar to the casing 110 in the first embodiment. As to the internal structure, this casing 110 is not different from the one in the first embodiment. However, this casing 110 does not have the hole 130 and the elastic piece 140 which are provided in the casing 110 of the first embodiment. Instead, a suction cup 160 is provided at the position corresponding to the hole 130. The suction cup is made of a soft and flexible material such as a rubber.

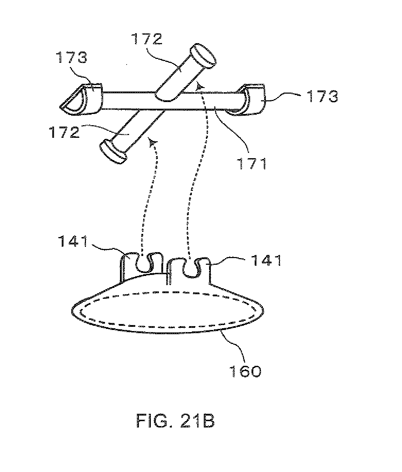

The suction cup 160 is attached to the casing 110 as shown in Fig. 21B. The suction cup 160 is fixed to the casing 110 through first bar-like piece 171 attached to the back surface of the casing 110 and two second bar-like pieces 172 provided on the opposite side of the first bar-like piece so that they crosses the first bar-like piece 171 in an orthogonal manner. The first bar-like piece 171 is attached to the casing with bearings 173 that receives the respective ends thereof and is allowed to rotate on the central axis of the axis. On the other hand, the second bar-like pieces 172 are fixed to the first bar-like piece 171 at their bases and are allowed to rotate on the first bar-like piece 171 along with the rotation of the first bar-like piece 171. On the other hand, two holding pieces 141 are provided on the back side of the suction cup 160 that are integrally formed with the suction cup 160. The two holding pieces 141 are attached to the second bar-like pieces 172 in such a positional relation that they grasps the first bar-like piece 171. The holding piece 141 has a bore in which the second bar-like piece 172 can be inserted therein through a notch. When the second bar-like piece 172 is pressed in the bore through the notch, it is attached to the second bar-like piece 172.

This image display device 3 can be removably fixed to the glass lens GL by sticking the suction cup 160 to the glass lens GL.

The suction cup 160 attached to the casing 110 in the aforementioned state can be swing-moved relative to the casing 110 with the first bar-like piece 171 and the second bar-like pieces 172 serving as the axes of rotation. In this embodiment, the first bar-like piece 171 runs along the longitudinal direction of the casing 110 while the second bar-like pieces 172 are perpendicular thereto. The image display device 3 attached to the glass lens GL can be swing-moved in the up-and-down and right-and-left directions.

How the image display device 3 in this embodiment is used is described now.

The image display device 3 in this embodiment is fixed to the glass lens GL before use by pressing the suction cup 160 onto the glass lens GL. In this state, the position of the magnifying lens 114 may be adjusted, the cable C may be fixed to the temple of the glasses G, or the angle of the image display device 3 may be adjusted.

The aforementioned operation is performed for both of the glass lenses GL for the right and left eyes.

After the aforementioned preparations, images are produced by the image display device 3.

More specifically, something that is connected to the cable C (e.g., a DVD player) is turned on and necessary operations are done. Then, the user can get the view of images similar to the one in the case of the first embodiment.

When there is no need for viewing the image, the image display device 3 is removed from the glass lens GL.

It should be noted that the image display device 3 of the third embodiment may be attached to either one of the glass lenses GL, or alternatively, it may be attached to both of them. The images are seen in a state as described in conjunction with the first embodiment or in a state as described in conjunction with the modified version 7 or 8 of the first embodiment for the latter and former cases, respectively.

For the former case, the blocking piece 300, 301 as described in conjunction with the modified versions 7 and 8 of the first embodiment may be attached to the glass lens GL on the side where no image display device 3 is attached.

### <<Fourth Embodiment>>

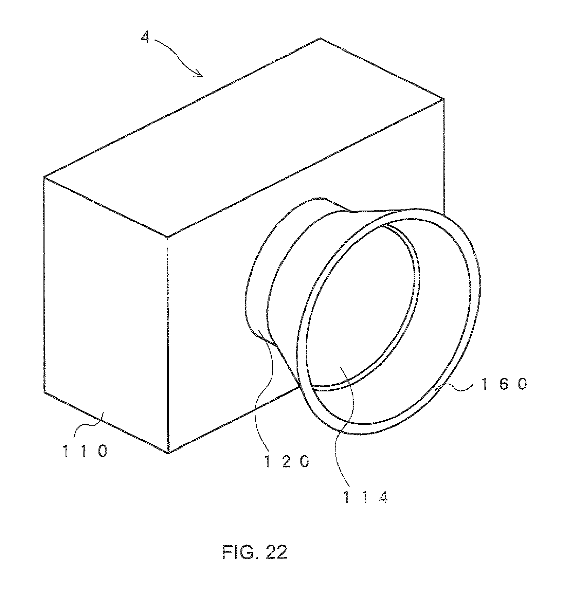

An image display device 4 according to a fourth embodiment is as shown in Fig. 22. This image display device 4 is similar in configuration to the most part of the image display device 3 of the third embodiment.

The image display device 3 according to the third embodiment includes the suction cup 160 on the back surface of the casing 110. The image display device 4 in this embodiment includes the suction cup 160 attached at a different position from the case of the third embodiment. The suction cup 160 in this embodiment is attached to a position near the end of the lens barrel 120. The suction cup 160 is made of a soft and flexible material such as a rubber, is shaped like a bowl, and has a bore formed therein (at the center in this embodiment) in which the bore is concentric with the suction cup 160. The suction cup 160 sticks to the lens barrel 120 with the lens barrel 120 being received within the bore. There is air tightness between the inside of the bore in the suction cup 160 and the outer surface of the lens barrel 120.

This image display device 4 can be removably fixed to the glass lens GL by attaching the suction cup 160 to the glass lens GL. The position to attach the suction cup 160 and the depth of the bowl-like portion therein are determined in such a manner that the end of the lens barrel 120 does not contact with the glass lens GL when the image display device 4 is fixed on the glass lens GL.

How the image display device 4 in this embodiment is used is similar to the way of use of the image display device 3.

It should be noted that the image display device 4 may be attached to either one of the glass lenses GL, or alternatively, to both of them, as in the case of the image display device 3. For the former case, the blocking piece 300, 301 as described in conjunction with the modified versions 7 and 8 of the first embodiment may be attached to the glass lens GL on the side where no image display device 4 is attached, as in the case of the third embodiment.

### <<Fifth Embodiment>>

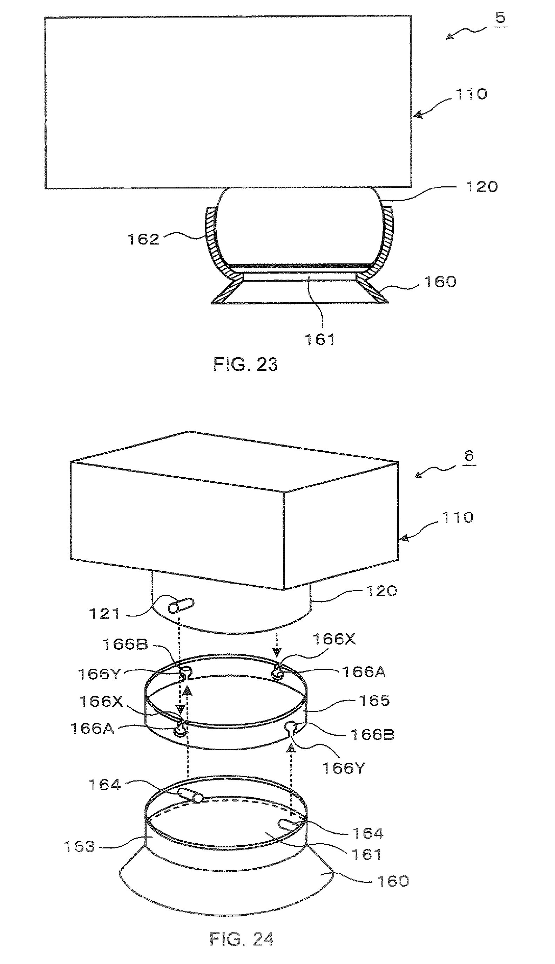

An image display device 5 according to a fifth embodiment is as shown in Fig. 23. The image display device 5 is similar in configuration to the most part of the image display device 3 of the third embodiment.

The image display device 3 according to the third embodiment includes the suction cup 160 on the back surface of the casing 110. The image display device 5 in this embodiment includes the suction cup 160 attached at a different position from the case of the third embodiment. The suction cup 160 in this embodiment is attached to a position near the end of the lens barrel 120. It should be noted that the outer configuration of the lens barrel 120 in this embodiment is like a drum as shown in Fig. 23 with the central portion thereof being projected outward.

The suction cup 160 is made of a soft and flexible material such as a rubber, is shaped like a bowl, and has a bore formed therein at or around the center thereof in which the bore is concentric with the suction cup 160. In addition, a transparent window member 161 is embedded in the bore in the suction cup 160. The window member 161 in this embodiment is made of a resin and is fixed to the inside of the bore so that the outer circumference thereof provides air-tightness with the inside of the bore. The suction cup 160 is securely connected to a fixture piece 162 at or around the window member 161. The inner contour of the fixture piece 162 matches the shape around the end of the outer circumference of the lens barrel 120. The fixture piece 162 in this embodiment is integrally formed with the suction cup 160. It should be noted that the fixture piece 162 is thicker than the suction cup 160.

The fixture piece 162 and the suction cup 160 integrally formed therewith are fixed to the lens barrel 120 by engaging the lens barrel 120 within the fixture piece 162.

The image display device 5 can be removably fixed to the glass lens GL by attaching the suction cup 160 to the glass lens GL. The position to attach the suction cup 160 and the depth of the bowl-like portion therein are determined in such a manner that the window member 161 does not contact with the glass lens GL when the image display device 5 is fixed on the glass lens GL.

In the image display device 5, the angle relative to the lens barrel 120, in other words, the angle relative to the optical axis of the lens within the lens barrel 120, may be varied within a range of about 20 degrees by sliding the fixture piece 162 with respect to the lens barrel 120. Therefore, the image display device 5 may be swing-moved in the up-and-down or right-and-left direction while being attached to the glass lens GL.

How the image display device 5 in this embodiment is used is similar to the way of use of the image display device 3. The user can swing the image display device 5 at an angle where images can be seen clearly by rotating the image display device 5 relative to the lens barrel 120 when necessary.

It should be noted that the image display device 5 may be attached to either one of the glass lenses GL, or alternatively, to both of them, as in the case of the image display device 3. For the former case, the blocking piece 300, 301 as described in conjunction with the modified versions 7 and 8 of the first embodiment may be attached to the glass lens GL on the side where no image display device 5 is attached, as in the case of the third embodiment.

### <<Sixth Embodiment>>

An image display device 6 according to a sixth embodiment is as shown in Fig. 24. The image display device 6 is similar in configuration to the most part of the image display device 3 of the third embodiment.

The image display device 3 according to the third embodiment includes the suction cup 160 on the back surface of the casing 110. The image display device 6 in this embodiment includes the suction cup 160 attached at a different position from the case of the third embodiment. The suction cup 160 in this embodiment is attached to a position near the end of the lens barrel 120. It should be noted that pins 121 each having a thin cylindrical shape in this embodiment are provided so that they are perpendicular to the outer surface of the lens barrel 120 at symmetrical positions relative to the central axis of the outer lens barrel 120 near the end of the lens barrel 120 in this embodiment.

The suction cup 160 is made of a soft and flexible material such as a rubber, is shaped like a bowl, and has a circular bore formed therein at or around the center thereof in which the bore is concentric with the suction cup 160. In addition, a transparent window member 161 is embedded in the bore in the suction cup 160. The window member 161 in this embodiment is made of a resin and is fixed to the inside of the bore so that the outer circumference thereof provides air-tightness with the inside of the bore. The suction cup 160 is securely connected to a fixture member 163 near the window member 161. The fixture member 163 is a ring-shaped member having the inner contour that matches the shape around the end of the outer circumference of the lens barrel 120. Pins 164 each having a thin cylindrical shape in this embodiment are provided at symmetrical positions relative to the central axis of the suction cup 160 of the inner surface of the fixture member 163 in this embodiment. The pins 164 are perpendicular to the inner surface of the fixture member 163.

The suction cup 160 and the lens barrel 120 are connected to each other with a ring member 165 having a shape of a ring. The ring member 165 has the inner diameter that is slightly larger than the outer diameter of the end of the lens barrel 120 has the outer diameter that is slightly smaller than the inner diameter of the fixture member 163. In addition, the ring member 165 has bores formed therein at four positions symmetrical relative to the center thereof. Each of two bores 166A of the four bores opposite to each other relative to the aforementioned center has a notch 166X for guiding the pin 121 provided on the lens barrel into a bore 166A. Each of the remaining two bores 166B has a notch 166Y, which extends in an opposite direction to the notch 166X, for guiding the pin 164 provided on the fixture member 163 into the bore 166B. The two pins 121 are slid within the notches 166X to engage them with the two bores 166A. The two pins 164 are slid within the notches 166Y to engage them with the two bores 166B. Thus, the lens barrel 120 is connected to the suction cup 160 through the ring member 165. The suction cup 160 that is attached to the lens barrel 120 in the manner described above can swing around the two axes (an axis obtained by virtually connecting the two pins 121 and an axis obtained by virtually connecting the two pins 164) relative to the lens barrel 120.

This image display device 6 can be removably fixed to the glass lens GL by attaching the suction cup 160 to the glass lens GL. The position to attach the suction cup 160 and the depth of the bowl-like portion therein are determined in such a manner that the window member 161 does not contact with the glass lens GL when the image display device 6 is fixed on the glass lens GL.

The aforementioned two axes in this embodiment are generally in parallel with the up-and-down and right-and-left directions when the image display device 6 is attached to the glass lens GL. Therefore, the image display device 6 in this embodiment can swing generally in the up-and-down and right-and-left directions while being attached to the glass lens GL. The user can adjust the image display device 6 to an angle at which images can be seen clearly.

How the image display device 6 in this embodiment is used is similar to the way of use of the image display device 3.

The image display device 6 may be attached to either one of the glass lenses GL, or alternatively, to both of them, as in the case of the image display device 3. For the former case, the blocking piece 300, 301 as described in conjunction with the modified versions 7 and 8 of the first embodiment may be attached to the glass lens GL on the side where no image display device 6 is attached, as in the case of the third embodiment.

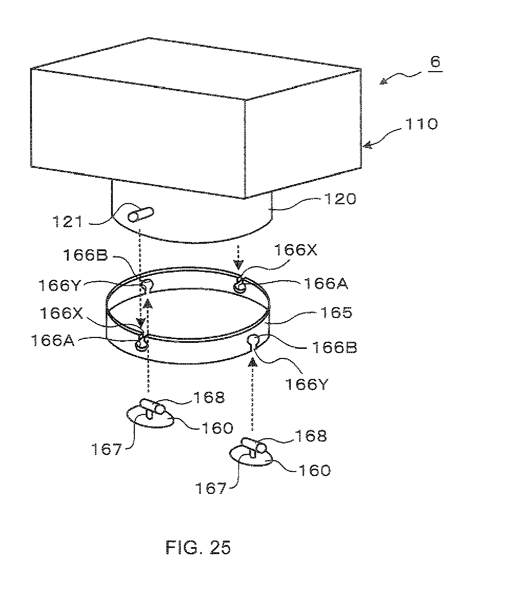

The suction cup 160 in the image display device 6 may be modified as shown in Fig. 25. There are two suction cups 160. The approximate center of a pin 168 which is formed in a similar manner to the aforementioned pin 164 is connected at the end of a rod-shaped leg 167 connected at the top thereof. The suction cup 160 is attached to the ring member 165 by sliding the pins 168 within the notches 166Y and engaging them in the bores 166B. The image display device 6 according to this modified version can also be swing-moved generally in the right-and-left and up-and-down directions while being attached to the glass lens GL.

## Claims

1. An image display device intended to be attached, in use, to a glass lens which is a lens of glasses that a user wears, comprises:
an intermediate member adapted to be fixed to a smooth surface of said glass lens; and
an image display device main body having display means and fixing means, the image display device being expected to be positioned in front of one eye of the user when the image display device is in use, the display means being adapted to direct an imaging light to form a predetermined image onto said one eye, thereby to provide said image to said one eye with said image included in a display area which is a part of the field of vision of said one eye, the fixing means being able to be fixed to said intermediate member in a removable manner.

2. The image display device as claimed in Claim 1, wherein said intermediate member includes a rod-shaped member that is adapted to be passed through said glass lens and fixed to said glass lens.

3. The image display device as claimed in Claim 1, wherein said intermediate member is adapted to be fixed to said glass lens in a removable manner.

4. The image display device as claimed in Claim 3, wherein said intermediate member includes a suction cup or an adhesive layer that can be removably attached to said glass lens, said intermediate member being adapted to be removably attached to said glass lens with said suction cup or said adhesive layer.

5. The image display device as claimed in Claim 1, wherein said intermediate member includes a rod-shaped projection, the rod-shaped projection being extended ahead of said glass lens when the intermediate member is fixed to said glass lens, the rod-shaped projection having a spherical portion at the end thereof that is generally spherical in shape,
said fixing means having a hollow space with an opening on one side, the hollow space being available for receiving said spherical portion through the opening, and said spherical portion being adapted to be held within said hollow space when said spherical portion is received in said hollow space.

6. The image display device as claimed in Claim 1, wherein said intermediate member includes a fixture member having a hollow space with an opening facing forward as determined when it is fixed to said glass lens,
said fixing means including a projection having a spherical portion that is generally spherical in shape at the end of a rod-shaped piece, the spherical portion being adapted to be inserted into said hollow space, and said spherical portion being adapted to be held within said hollow space when said spherical portion is received in said hollow space.

7. The image display device as claimed in Claim 1, wherein said intermediate member includes a convex portion having a convex surface that forms a part of a predetermined spherical surface, the convex portion curving forward as determined when it is fixed to said glass lens,
said fixing means including a concave portion having a concave surface that is a curved surface corresponding to the contour of said convex surface,
said convex portion being adapted to attract said concave portion towards it or vise versa with magnetic force.

8. The image display device as claimed in Claim 1, wherein said intermediate member includes a concave portion having a concave surface with an opening facing forward as determined when it is fixed to said glass lens,
said fixing means including a convex portion having a convex surface that forms a part of a predetermined spherical surface which is a curved surface corresponding to the contour of said concave surface,
said convex portion being adapted to attract said concave portion towards it or vise versa with magnetic force.

9. The image display device as claimed in Claim 1, wherein said intermediate member includes at least three projection pieces, each projection piece being extended forward as determined when it is fixed to said glass lens, from said glass lens, the projection pieces being arranged so that they are away from each other at a predetermined distance,
said fixing means including a convex portion having a convex surface that is to be in contact with said projection pieces,
said convex portion being adapted to attract said projection pieces towards it or vise versa with magnetic force.

10. The image display device as claimed in any one of Claims 1 to 9, wherein said fixing means is adapted to allow swing movement of said image display device main body in at least one of the up-and-down and right-and-left directions while being held by said intermediate member.

11. An image display device intended to be attached, in use, to a smooth surface of a glass lens which is a lens of glasses that a user wears, comprises:
display means and lens holding means, the image display device being expected to be positioned in front of one eye of the user when the image display device is in use, the display means being adapted to direct an imaging light to form a predetermined image onto said one eye, thereby to provide said image to said one eye with said image included in a display area which is a part of the field of vision of said one eye, the lens holding means being able to be fixed to said glass lens in a removable manner.

12. The image display device as claimed in Claim 11, wherein said lens holding means includes a suction cup or an adhesive layer that can be removably attached to said glass lens, said intermediate member being adapted to be fixed to said glass lens in a removable manner with said suction cup or said adhesive layer.

13. The image display device as claimed in Claim 11 comprising a casing in which said display means is contained, and a lens barrel extended from said casing, the lens barrel containing a lens for use in directing an imaging light from said display means to an eye of a user,
said lens holding means being provided on or in said lens barrel.

14. The image display device as claimed in Claim 13, wherein said lens holding means is in the form of a suction cup having a bore formed therein, the bore being adapted to engage with the outer periphery of said lens barrel, the suction cup being attached to the outer peripheral surface of said lens barrel with said lens barrel being held within the bore.

15. The image display device as claimed in Claim 13, wherein said lens holding means is in the form of a suction cup having a transparent portion therein through which said imaging light is allowed to travel, the suction cup being attached to the end of said lens barrel with the transparent portion facing against the end of said lens barrel.

16. The image display device as claimed in Claim 13, wherein said lens holding means is an adhesive provided at the end of said lens barrel.

17. The image display device as claimed in any one of Claims 11 to 16, wherein said lens holding means being adapted to allow swing movement of said image display device in at least one of the up-and-down and the right-and-left directions while being fixed to said glass lens.
